(19) Europäisches Patentamt
European Patent Office
Office européen des brevets

(11) **EP 3 132 200 B1**

(12) **EUROPÄISCHE PATENTSCHRIFT**

(45) Veröffentlichungstag und Bekanntmachung des Hinweises auf die Patenterteilung:
**06.06.2018 Patentblatt 2018/23**

(51) Int Cl.:
*F23N 5/16* *(2006.01)*          *F23N 5/02* *(2006.01)*
*F02C 9/28* *(2006.01)*          *F02C 9/48* *(2006.01)*

(21) Anmeldenummer: **15720288.8**

(22) Anmeldetag: **17.04.2015**

(86) Internationale Anmeldenummer:
**PCT/EP2015/058393**

(87) Internationale Veröffentlichungsnummer:
**WO 2015/169565 (12.11.2015 Gazette 2015/45)**

(54) **VERFAHREN ZUM BETREIBEN EINER BRENNERANORDNUNG**

METHOD FOR OPERATING A BURNER ASSEMBLY

PROCÉDÉ DE FONCTIONNEMENT D'UN SYSTÈME DE BRÛLEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.05.2014 EP 14166969**

(43) Veröffentlichungstag der Anmeldung:
**22.02.2017 Patentblatt 2017/08**

(73) Patentinhaber: **Siemens Aktiengesellschaft 80333 München (DE)**

(72) Erfinder:
• **DEUKER, Eberhard**
  **45481 Mülheim an der Ruhr (DE)**
• **KOCK, Boris Ferdinand**
  **40878 Ratingen (DE)**
• **SIMON, Dieter**
  **45473 Mülheim an der Ruhr (DE)**

(56) Entgegenhaltungen:
**EP-A1- 1 724 528          EP-A2- 1 348 908
DE-A1-102007 059 701**

EP 3 132 200 B1

**Beschreibung**

Die vorliegende Erfindung betrifft ein Verfahren zum Betreiben einer Brenneranordnung, insbesondere einer Brenneranordnung einer Gasturbine, bei dem eine die Verbrennungsstabilität repräsentierenden Bewertungsgröße ermittelt und zumindest basierend auf der ermittelten Bewertungsgröße wenigstens eine Stellgröße verändert wird.

Die DE 10 2007 059 701 A1 offenbart ein Verfahren zur Regelung eines Gasbrenners, bei dem in der Flamme oder im Abgas eine für die Luftzahl $\lambda$ charakteristische Messgröße erfasst und ein Luftzahl-Messsignal einer Regel-/Auswerteeinheit zuführt wird, welche das Luftzahl-Messsignal mit einem Sollwert vergleicht und die Luftzahl $\lambda$ auf den Sollwert einstellt. Ein Detektor erfasst eine für eine thermoakustische Schwingung charakteristische Messgröße und führt ein Thermoakustik-Messsignal der Regel-/Auswerteeinheit zu. In Abhängigkeit von dem Thermoakustik-Messsignal wird die Luftzahl $\lambda$ verändert. Ein Verfahren zum Betreiben einer Brenneranordnung gemäß dem Oberbegriff des Anspruchs 1 ist aus DE 10 2007 059701 bekannt. Beim Betrieb einer Gasturbinenanlage gilt es neben der Einhaltung von Leistung, Wirkungsgrad und Emissionsgrenzwerten vor allem darum, die Verbrennungsstabilität in einem sicheren Betriebsbereich zu halten. Unter Verbrennungsstabilität wird vorliegend das thermo-akustische Verhalten der Kombination aus Brennern und Brennkammern verstanden. So kann es durch Anregung thermo-akustischer Moden zu starken Wechselwirkungen in der Brennkammer kommen, die mechanischen Schaden an der Maschine bewirken können. Entsprechend gilt es Frequenzbänder zu meiden, in denen schädliche maximale Amplituden auftreten. In diesem Zusammenhang kommen in jüngster Vergangenheit immer häufiger geschlossene Regelkreise zum Einsatz, die darauf abzielen, kritische Frequenzbänder zu verhindern und auf diese Weise das thermo-akustische Verhalten zu kontrollieren. Die kritischen Frequenzbänder werden hierzu in separaten Regelkreisen überwacht, die in einem Regler zusammengefasst sind.

Als Stellgrößen dienen vor allem der der Brenneranordnung zugeführte Gesamtbrennstoffvolumenstrom, die Aufteilung des Gesamtbrennstoffvolumenstroms auf einzelne Brennerstufen der Brenneranordnung und die Positionierung verstellbarer Vorleitschaufeln der Brenneranordnung, um nur einige Beispiele zu nennen. Ein Nachteil derartiger Regelungen besteht allerdings darin, dass ein Vorsehen mehrerer Regelkreise mit hohen Kosten einhergeht. Darüber hinaus variieren die kritischen Frequenzbänder in Abhängigkeit von den Leistungsbereichen der Brenneranordnung. Frequenzbänder, die in einem ersten Leistungsbereich keinen nennenswerten Einfluss auf die Verbren nungsstabilität nehmen, können sich in einem anderen Leistungsbereich negativ auf diese auswirken und umgekehrt. Entsprechend können unterschiedliche Regelziele miteinander konkurrieren, wenn verschiedene Frequenzen in demselben Leistungsbereich auftreten und die Abhilfe-Maßnahmen bzw. Stellgrößen unterschiedlich sind.

Ausgehend von diesem Stand der Technik ist es eine Aufgabe der vorliegenden Erfindung, ein alternatives Verfahren der eingangs genannten Art zu schaffen, mit dem eine zuverlässige und preiswerte Regelung der Verbrennungsstabilität erzielt wird.

Zur Lösung dieser Aufgabe schafft die vorliegende Erfindung ein Verfahren der eingangs genannten Art, das dadurch gekennzeichnet ist, dass der Sollbereich der Bewertungsgröße über den gesamten Leistungsbereich der Maschine konstant ist und die Bewertungsgröße basierend auf gemessenen maximalen Ist-Amplituden in vorab definierten Frequenzbändern und gemessenen Ist-Leistungen der Brenneranordnung ermittelt wird. Auf diese Weise kann die Verbrennungsstabilität mit einfachen Mitteln basierend auf einer einzelnen Bewertungsgröße und damit über einen einzelnen Regelkreis über den gesamten Leistungsbereich der Maschine ohne konkurrierende Regelziele in einem sicheren Betriebsbereich gehalten werden.

Im Hinblick auf die Kontrolle thermo-akustischer Moden sind die Ist-Amplituden bevorzugt Wechseldruck-Ist-Amplituden bzw. Bauteilbeschleunigungs-Ist-Amplituden.

Vorteilhaft wird die Bewertungsgröße unter Verwendung leistungsabhängiger Gewichtungsfaktoren und/oder frequenzabhängiger Gewichtungsfaktoren ermittelt.

Die leistungsabhängigen Gewichtungsfaktoren dienen dazu, den negativen Einfluss eines Frequenzbandes in Abhängigkeit von dem Leistungsbereich der Brenneranordnung zu definieren. So werden die leistungsabhängigen Gewichtungsfaktoren mit zunehmendem negativen Einfluss entweder höher oder niedriger gewählt. Frequenzbereiche, die in bestimmten Leistungsbereichen der Fahrkurve keinen negativen Einfluss auf die Verbrennungsstabilität haben, da in diesen keine für die Verbrennungsstabilität schädlichen maximalen Amplituden auftreten, können dank solcher leistungsabhängiger Gewichtungsfaktoren "ausgeschaltet" werden, so dass sie bei der Ermittlung der Bewertungsgröße nicht berücksichtigt werden. Auf diese Weise kann ein verfälschender Einfluss irrelevanter Frequenzbereiche auf die ermittelte Begleitungsgröße verhindert werden. Andere Frequenzbereiche, die in bestimmten Leistungsbereichen der Fahrkurve einen negativen Einfluss auf die Verbrennungsstabilität aufgrund schädlicher maximaler Amplituden entfalten, können in Abhängigkeit ihrer Relevanz für die einzelnen Leistungsbereiche separat gewichtet werden, so dass sie mehr oder weniger stark in die ermittelte Bewertungsgröße eingehen. Die leistungsabhängigen Gewichtungsfaktoren ermöglichen somit eine Bewertung über den gesamten Leistungsbereich der Maschine bzw. der Brenneranordnung.

Die frequenzabhängigen Gewichtungsfaktoren dienen dazu, den absoluten Beitrag der jeweiligen Frequenzbänder bzw. der maximalen Amplituden der jeweiligen Frequenzbänder zur Bewertungsgröße zu definieren. Hintergrund kann hier beispielsweise eine unterschiedliche Bedeutung der maximalen Amplituden der einzelnen Frequenzbänder auf die Verbrennungsstabilität sein. So können die frequenzabhängigen Gewichtungsfaktoren analog zu den leistungsabhängigen Gewichtungsfaktoren mit zunehmendem negativen Einfluss entweder höher oder niedriger gewählt werden. Mit anderen Worten können die frequenzabhängigen Gewichtungsfaktoren derart gewählt werden, dass die maximalen Amplituden der einzelnen Frequenzbänder hinsichtlich ihres negativen Einflusses auf die Verbrennungsstabilität auf ein vergleichbares Niveau gebracht werden, so dass sie entsprechend gewichtet in die ermittelte Bewertungsgröße eingehen. Auf diese Weise ist es möglich, den Sollbereich der Bewertungsgröße über den gesamten Leistungsbereich konstant zu halten.

Insbesondere ist die Bewertungsgröße definiert als die Summe $g_{f1} \cdot k_1 \cdot A_1^2 + g_{f2} \cdot k_2 \cdot A_2^2 + ... + g_{fn} \cdot k_n \cdot A_n^2$, wobei $A_1$ bis $A_n$ die maximalen Amplituden in den Frequenzbändern $f_1$ bis $f_n$, $g_{f1}$ bis $g_{fn}$ die leistungsabhängigen Gewichtungsfaktoren der Frequenzbänder $f_1$ bis $f_n$, und $k_1$ bis $k_n$ die frequenzbandabhängigen Gewichtungsfaktoren repräsentieren.

Vorteilhaft weisen die leistungsabhängigen Gewichtungsfaktoren $g_{f1}$ bis $g_{fn}$ einen Wert zwischen 0 und 1 auf. So können die Gewichtungsfaktoren $g_{fi}$ (mit i = 1 bis n) zum Beispiel abschnittsweise über der relativen Leistung der Brenneranordnung definiert werden. Beispielsweise kann der leistungsabhängige Gewichtungsfaktor $g_{fi}$ den Wert 0 erhalten, wenn $a < P^* \leq b$ ist, wobei $P^*$ die Ist-Leistung der Brenneranordnung repräsentiert, den Wert 0,5 wenn $c < P^* \leq d$ ist, und den Wert 1, wenn $e < P^* \leq f$ ist, wobei die Größen a, b, c, d, e und f die Leistungsbereiche kennzeichnen, in denen die jeweiligen Frequenzbänder einen Beitrag zur Bewertungsgröße liefern. Diese Werte variieren maschinenspezifisch und können von Fall zu Fall angepasst werden. Der jeweilige Wert der leistungsabhängigen Gewichtungsfaktoren $g_{fi}$, beispielsweise 0, 0,5 oder 1, kann ebenfalls maschinenspezifisch gewählt werden. Analog können den frequenzabhängigen Gewichtungsfaktoren $k_1$ bis $k_n$ Werte von 0 bis 1 zugeordnet werden.

Gemäß einer Ausgestaltung des erfindungsgemäßen Verfahrens handelt sich bei der wenigstens einen Stellgröße um den der Brenneranordnung zugeführten Gesamtbrennstoffvolumenstrom und/oder um den der Brenneranordnung zugeführten Gesamtverbrennungsluftvolumenstrom und/oder um eine Aufteilung des der Brenneranordnung zugeführten Gesamtbrennstoffvolumenstroms auf einzelne Brennerstufen der Brenneranordnung und/oder um die Positionierung verstellbarer Vorleitschaufeln der Brenneranordnung.

Der wesentliche Vorteil des erfindungsgemäßen Verfahrens gegenüber bekannten Verfahren, die kritische Frequenzbänder einzeln überwachen und beim Auftreten kritischer Frequenzen Stellgrößen verändern, um einen negativen Einfluss auf die Verbrennungsstabilität zu verhindern, besteht darin, dass miteinander konkurrierende Regelziele nicht auftreten können. Entsprechend ist stets eine ordnungsgemäße Funktionsweise sichergestellt. Darüber hinaus kann das erfindungsgemäße Verfahren mit einer einzigen Regelung einfach und preiswert realisiert werden.

**Patentansprüche**

1. Verfahren zum Betreiben einer Brenneranordnung, insbesondere einer Brenneranordnung einer Gasturbine, bei dem eine die Verbrennungsstabilität repräsentierenden Bewertungsgröße ermittelt und zumindest basierend auf der ermittelten Bewertungsgröße wenigstens eine Stellgröße verändert wird, wenn die ermittelte Bewertungsgröße nicht innerhalb eines vorab definierten Sollbereiches liegt, wobei der Sollbereich der Bewertungsgröße über den gesamten Leistungsbereich der Maschine konstant ist und **dadurch gekennzeichnet, dass** die Bewertungsgröße basierend auf gemessenen maximalen Ist-Amplituden in vorab definierten Frequenzbändern und gemessenen Ist-Leistungen der Brenneranordnung ermittelt wird.

2. Verfahren nach Anspruch 1, wobei die Ist-Amplituden Wechseldruck-Ist-Amplituden bzw. Bauteilbeschleunigungs-Ist-Amplituden sind.

3. Verfahren nach Anspruch 1 oder 2, **dadurch gekennzeichnet, dass** die Bewertungsgröße unter Verwendung leistungsabhängiger Gewichtungsfaktoren und/oder frequenzabhängiger Gewichtungsfaktoren ermittelt wird.

4. Verfahren nach einem der vorhergehenden Ansprüche, **dadurch gekennzeichnet, dass** die Bewertungsgröße definiert ist als die Summe

$$g_{f1} \cdot k_1 \cdot A_1^2 + g_{f2} \cdot k_2 \cdot A_2^2 + ... + g_{fn} \cdot k_n \cdot A_n^2$$

wobei $A_1$ bis $A_n$ die maximalen Amplituden in den Frequenzbändern $f_1$ bis $f_n$, $g_{f1}$ bis $g_{fn}$ leistungsabhängige Gewichtungsfaktoren der Frequenzbänder $f_1$ bis $f_n$, und $k_1$ bis $k_n$ frequenzbandabhängige Gewichtungsfaktoren reprä-

sentieren.

5. Verfahren nach Anspruch 4, **dadurch gekennzeichnet, dass** die leistungsabhängigen Gewichtungsfaktoren $g_{f1}$ bis $g_{fn}$ und/oder die frequenzabhängigen Gewichtsfaktoren $k_1$ bis $k_n$ einen Wert zwischen 0 und 1 aufweisen.

6. Verfahren nach einem der vorhergehenden Ansprüche, **dadurch gekennzeichnet, dass** es sich bei der wenigstens einen Stellgröße um den der Brenneranordnung zugeführten Gesamtbrennstoffvolumenstrom und/oder um den der Brenneranordnung zugeführten Gesamtverbrennungsluftvolumenstrom und/oder um eine Aufteilung des der Brenneranordnung zugeführten Gesamtbrennstoffvolumenstroms auf einzelne Brennerstufen der Brenneranordnung und/oder um die Positionierung verstellbarer Vorleitschaufeln der Brenneranordnung handelt.

## Claims

1. Method for operating a burner assembly, in particular a burner assembly of a gas turbine, wherein an evaluation variable representing the combustion stability is determined and at least one control variable is altered at least on the basis of the determined evaluation variable when the determined evaluation variable does not lie within a previously defined desired range, wherein the desired range of the evaluation variable is constant over the entire output range of the machine and **characterized in that** the evaluation variable is determined on the basis of measured maximum actual amplitudes in previously defined frequency bands and measured actual outputs of the burner assembly.

2. Method according to Claim 1, wherein the actual amplitudes are alternating pressure actual amplitudes or component acceleration actual amplitudes.

3. Method according to Claim 1 or 2, **characterized in that** the evaluation variable is determined using output-dependent weighting factors and/or frequency-dependent weighting factors.

4. Method according to one of the preceding claims, **characterized in that** the evaluation variable is defined as the sum

$$g_{f1} \cdot k_1 \cdot A_1^2 + g_{f2} \cdot k_2 \cdot A_2^2 + \ldots + g_{fn} \cdot k_n \cdot A_n^2$$

wherein $A_1$ to $A_n$ represent the maximum amplitudes in the frequency bands $f_1$ to $f_n$, $g_n$ to $g_{fn}$ represent output-dependent weighting factors of the frequency bands $f_1$ to $f_n$, and $k_1$ to $k_n$ represent frequency-band-dependent weighting factors.

5. Method according to Claim 4, **characterized in that** the output-dependent weighting factors $g_{f1}$ to $g_{fn}$ and/or the frequency-dependent weighting factors $k_1$ to $k_n$ have a value between 0 and 1.

6. Method according to one of the preceding claims, **characterized in that** the at least one control variable comprises the total fuel volume flow supplied to the burner assembly and/or the total combustion air volume flow supplied to the burner assembly and/or a division of the total fuel volume flow supplied to the burner assembly into individual burner stages of the burner assembly and/or the positioning of adjustable inlet guide vanes of the burner assembly.

## Revendications

1. Procédé pour faire fonctionner un système de brûleur, notamment un système de brûleur d'une turbine à gaz, dans lequel on détermine une grandeur d'estimation représentant la stabilité de la combustion et, au moins sur la base de la grandeur d'estimation déterminée, on modifie au moins une grandeur de réglage, si la grandeur d'estimation déterminée ne se trouve pas dans une plage de consigne définie à l'avance, dans lequel la plage de consigne de la grandeur d'estimation est constante sur toute la plage de puissance de la machine et **caractérisé en ce que** l'on détermine la grandeur d'estimation sur la base d'amplitudes réelles maximum mesurées dans des bandes de fréquence définies à l'avance et de puissances réelles mesurées du système de brûleur.

2. Procédé suivant la revendication 1, dans lequel les amplitudes réelles sont des amplitudes réelles de pression alternée ou des amplitudes réelles d'accélération d'une pièce.

3. Procédé suivant la revendication 1 ou 2, **caractérisé en ce que** l'on détermine la grandeur d'estimation en utilisant des facteurs de pondération qui dépendent de la puissance et/ou des facteurs de pondérations qui dépendent de la fréquence.

4. Procédé suivant l'une des revendications précédentes, **caractérisé en ce que** la grandeur d'estimation est définie comme étant la somme

$$g_{f1} \cdot k_1 \cdot A_1^2 + g_{r2} \cdot k_2 \cdot A_2^2 + \ldots + g_{fn} \cdot k_n \cdot A_n^2$$

dans laquelle $A_1$ à $A_n$ sont les amplitudes maximum dans les bandes de fréquence $f_1$ à $f_n$, $g_n$ à $g_{fn}$ sont des facteurs de pondération qui dépendent de la puissance des bandes de fréquence $f_1$ à $f_n$, $k_1$ à $k_n$ sont des facteurs de pondération qui dépendent de la bande de fréquence.

5. Procédé suivant la revendication 4, **caractérisé en ce que** les facteurs $g_{f1}$ à $g_{fn}$ de pondération qui dépendent de la puissance et/ou les facteurs $k_1$ à $k_n$ de pondération qui dépendent de la fréquence ont une valeur comprise entre 0 et 1.

6. Procédé suivant l'une des revendications précédentes, **caractérisé en ce que** la au moins une grandeur de réglage est le courant volumique total de combustion envoyé au système de brûleur et/ou le courant volumique d'air de combustion total envoyé au système de brûleur et/ou une répartition du courant volumique de combustible total envoyé à l'agencement du brûleur entre divers étages du système de brûleur et/ou le positionnement d'aubes directrices réglables du système de brûleur.

**EP 3 132 200 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007059701 A1
- DE 102007059701